# EUROPEAN PATENT APPLICATION

(11) **EP 4 779 460 A1**
(43) Date of publication of application: **22.07.2026**
(21) Application number: 25152278.5
(22) Date of filing: 16.01.2025
(51) Int. Cl.: G06F 8/10, G06F 11/3668

(54) **COMPUTER-IMPLEMENTED METHOD AND CORRESPONDING SYSTEM FOR PROVIDING ONE OR MORE ACCEPTANCE TESTS MEETING ACCEPTANCE CRITERIA OF AN AMOUNT OF IDENTIFIED REQUIREMENTS FOR A TECHNICAL SYSTEM**

(71) Applicant: Siemens Aktiengesellschaft, 80333 München (DE)
(72) Inventor: Körner, Christian, 83346 Bergen (DE); Plösch, Reinhold, 4040 Linz (AT); Tuncel, Doruk, 81541 München (DE)
(74) Representative: Siemens Patent Attorneys

(57) **Abstract**

Computer-implemented method and corresponding system for providing one or more acceptance tests meeting acceptance criteria of an amount of identified requirements for a technical system

The invention relates to a computer-implemented method for providing one or more acceptance tests meeting acceptance criteria of an amount of identified requirements for a technical system, comprising the following steps:
a) Identifying an amount of requirements and providing a requirement text of each identified requirement as input;
b) Generating a textual acceptance test description as output by prompting a Generative AI system comprising the input;
c) Rating each acceptance test of the generated output in a proportion of requirements' coverage;
d) Depending on the rating result providing a revised version of the generated textual acceptance test description;
e) Re-rating the revised version of the acceptance test;
f) Forming samples of the textual acceptance test descriptions classified according to their rating result and storing/using them for training of the Generative AI system.

## Description

The invention relates to a computer-implemented method and corresponding system for providing one or more acceptance tests meeting acceptance criteria of an amount of identified requirements for a technical system (in operation). The system can be implemented in software and/or hardware which is used for running/operating and/or controlling a technical system e.g. an industrial machine or device.

### BACKGROUND OF THE INVENTION

Software development nowadays works more in cycles (DevOPs = "Dev" (Development) and "Ops" (Operations)) than in phases like in the waterfall methodology used in former software development. DevOps teams - often organized in Scrum Teams - use short feedback loops with customers and end users to develop products and services that meet stakeholders' expectations/requirements. Acceptance tests play a critical role in ensuring project fulfillment. It is necessary to have a thorough understanding of the requirements and the technical capability to formulate them in a way that allows for automated testing of the fulfillment of acceptance criteria which cover the requirements. Iterative nature of DevOps system provision needs maintenance of functional and aligned acceptance tests for a significantly high number of requirements. This becomes challenging after each sprint as the requirements undergo changes and new requirements are added. In an agile development framework like Scrum a sprint means a set period of time during which specific work has to be completed and made ready for review. Incorporating sprints into the software development lifecycle encourages iterative development and continuous improvement, ultimately helping organizations to produce quality software faster and often at lower cost.

Each requirement must be carefully refined into multiple (typically 3-10) acceptance tests, ensuring the accurate translation of the requirement and comprehensive coverage by the acceptance tests.

Furthermore, these acceptance tests have to be maintained throughout the entire lifespan of the system. The acceptance tests must not only be syntactically correct to function properly, but also need to remain semantically consistent with the changing requirements.

In view of this, the objective is to develop an efficient and reliable assistance system suitable for generating acceptance tests with as many automated processing steps as possible.

### SUMMARY OF THE INVENTION

The above-mentioned objective is achieved by a method and one or more apparatus and/or a system and/or a device according to the features of the independent claims.

Preferred embodiments of the invention are described in the dependent claims. Any combination of the features of the dependent claims to each other and with the features of the independent claims is possible.

An aspect of the invention is a computer-implemented method for providing one or more acceptance tests meeting acceptance criteria of an amount of identified requirements for a technical system (in operation), comprising the following steps:
a) Identifying an amount of requirements and providing a requirement text of each identified requirement as input;
b) Generating a textual acceptance test description as output by prompting a Generative AI system comprising the input;
c) Rating each acceptance test of the generated output in a proportion of requirements' coverage;
d) Depending on the rating result providing a revised version of the generated textual acceptance test description;
e) Re-rating the revised version of the acceptance test;
f) Forming samples of the textual acceptance test descriptions classified according to their rating result and storing/using them for training of the Generative AI system.

The amount of requirements is searched in at least one application lifecycle management systems.

Requirements (see a)) can be selected from a user interface device or bot in more advanced versions.

In the case of that any modification or any new matter in said amount of requirements are identified the steps a) to f) are repeated.

Evaluation/rating results can be presented as distance and/or proportion between a requirement and the output of the generated acceptance test on the user interface device. So the user can recognize the output of the generated one or more acceptance tests and correct the one or more acceptance tests.

Generative artificial intelligence (generative Al, GenAl, or GAI) is a subset of Artificial intelligence that uses a Generative Model to produce text, images, videos, or other forms of data. These models often generate output in response to specific prompt (mostly natural language) . Generative AI systems (https://en.wikipedia.org/wiki/Machine_learning ) learn from the underlying patterns and structures of their training data set, enabling them to create new data. In particular so-called Large Language Model, LLM, is a language model that is characterized by its ability to understand and generate language for general purposes. LLMs acquire these skills by learning statistical relationships from very large sets of text documents during a computationally intensive self-supervised and semi-supervised training process. LLMs are so-called neural networks that follow a transformer architecture. Notable examples are the GPT models from OpenAI (GPT, Generative Pretrained Transformer) e.g. B. GPT-3.5 and GPT-4 used in ChatGPT), PaLM from Google (used in Bard) and LLaMA from Meta, as well as BLOOM, Ernie 3.0 Titan and Claude 2 from Anth-ropic.

The above mentioned Generative AI system can be trained with the samples and after the training the steps a) to f) are applied by using the trained Generative AI system.

If evaluation results meet the pre-defined goal, the goal can be change and the bar can be raised.

A further aspect of the invention is a (technical) system/an apparatus for carrying out the above mentioned computer implemented method and its embodiments.

The inventive development of a highly automated method and system that assists in generating a significant number of acceptance tests formulated in a formal language, with minimal correction required.

The inventive method and technical system offers flexibility to handle various types of requirements, including stakeholder requirements, software requirements, user stories, and epics. By automating the test generation process and providing a standardized format e.g. Gherkin, the creation of acceptance tests is streamlined and consistency and accuracy across different types of requirements is ensured.

The processor can steer and/or control and/or load and/or execute method steps of the above mentioned method. The processor can be part of a server or of a runtime environment within the multi-user system.

Embodiments as described above for the method can be analogously applied for the system and for computer program (product) and for a computer-readable storage and/ provisioning medium.

Systems can be implemented by hardware, firmware and/or software modules or a combination of them.

The method and corresponding apparatus/system assists in generating a significant number of acceptance tests, particularly formulated in Gherkin, with minimal intervention or required correction.

This method and technical support should offer the necessary flexibility to handle various types of requirements, including stakeholder requirements, software requirements, user stories, and epics. By automating the test generation process and providing a standardized formal language like Gherkin, the creation of acceptance tests is streamlined and consistency and accuracy across different types of requirements is ensured.

The computer-readable storage medium stores instructions executable by one or more processors of a computer, wherein execution of the instructions causes the computer system to perform the method. The one or more processors can be distributed organized on servers or in a cloud.

The computer program (product) is executed by one or more processors of a computer and performs the method.

### BRIEF DESCRIPTION OF THE SEVERAL VIEWS OF THE DRAWINGS

The foregoing and other aspects of the present invention are best understood from the following detailed description when read in connection with the accompanying drawings. For the purpose of illustrating the invention, embodiments that are presently preferred are shown in the drawings, it being understood, however, that the invention is not limited to the specific instrumentalities disclosed. In the figures, identical or functionally identical elements are denoted by identical reference signs. Included in the drawings are the following figures:
The figure 1 shows modules of inventive system and its environment, and
the figure 2 shows a flow chart of the inventive method.

### DETAILED DESCRIPTION OF PREFERRED EXAMPLES/EMBODIMENTS

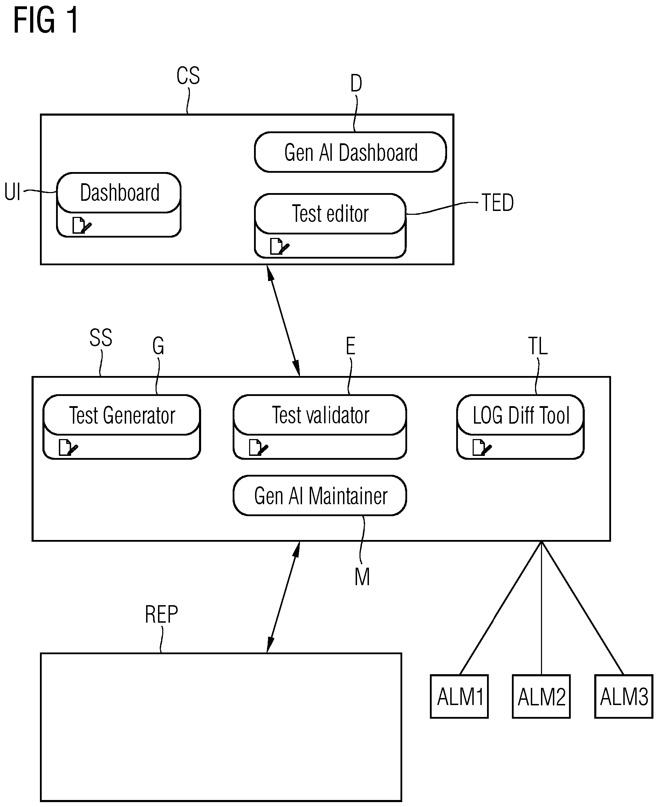

As shown in the figure 1 the system comprises the following components und/or modules respectively.

The system uses client components for information processing and server components for acceptance test creation. In this example external test and ALM systems (application lifecycle management) are connected via connectors.
1. Client CS components:
   1.1 A user interface UI designed as a dashboard
   1.2 A test editor TED
   1.3 A GenAl interface D designed as a dashboard
2. Server SS components:
   2.1 A test generator component G
   2.2 A test validator E
   2.3 A GenAl Maintainer M
   2.4 An Update Controller TL
   2.5 Connectors to external ALM systems ALM1, ALM2, ALM3
3. Repositories REP
   3.1 Repository for acceptance tests
   3.2 Repository for GenAl models

### Ad 1. Client

### Ad 1.1 Ul/Dashboard:

A dashboard serves as a central interface for presenting the state of acceptance tests, requirements state, and validation results. It also controls the import of new/changed requirements. It also provides information on the current state and evolution of generation quality over time.

### Ad 1.2 A test editor TED

This component allows users to view and interact with the generated acceptance tests. Users can make changes to the acceptance tests. This component keeps track of which acceptance tests have been modified.

### Ad 1.3 GenAl interface

The GenAl-Model Dashboard controls the improvement of the AI model.

### Ad 2 Server:

### Ad 2.1 A test generator component G

This component generates acceptance criteria based on or derived from requirements and configuration information. It utilizes artificial intelligence algorithms to generate acceptance tests. An acceptance test fulfils acceptance criteria and covers one or more requirements if the test is successful. The acceptance tests are described in a textual form/manner.

### Ad 2.2 A test validator E

This component (re-)validates the generated acceptance tests based on an enhanced GenAl system provided by the GenAl Trainer. This ensures that the acceptance tests remain accurate and reliable. The (re-)validation rates each generated acceptance tests in a proportion of requirement coverage.

### Ad 2.3 A GenAl Maintainer M

This component trains the underlying GenAl system based on changed and not yet considered (new) acceptance tests. This improves the performance and accuracy of the GenAl system. For training the GenAl system different methodologies can be used like finetuning (see https://en.wikipedia.org/wiki/Fine-tuning_(deep_learning)) or RAG (retrieval augmented generation, see https://cloud.google.com/use-cases/retrieval-augmented-generation).

### Ad 2.4 An Update Controller TL

This component periodically checks with the associated GenAl systems to determine if there are any updates to the requirements. If new or changed requirements are available, this data is integrated, and acceptance test validation is triggered. A not shown filtering component allows users to retrieve only requirements with specific labels or those that have been changed.

### Ad 2.5. Connectors to external ALM systems ALM1, ALM2, ALM3

The server works with different ALM systems, such as Gitlab, Github, Azure DevOps, and Polarion. Each connector transforms general requests for requirements into the specific protocols used by the ALM systems. Application Lifecycle Management Systems (ALM) are useful for managing and changing requirements. The ALM systems serve as storage for requirements and provide necessary data for the acceptance test generation and GenAl improvement process.

### Ad 3 Repositories

### Ad 3.1 Repository for acceptance tests:

A repository particularly designed to store the generated acceptance tests.

### Ad 3.2. Repository for GenAl models

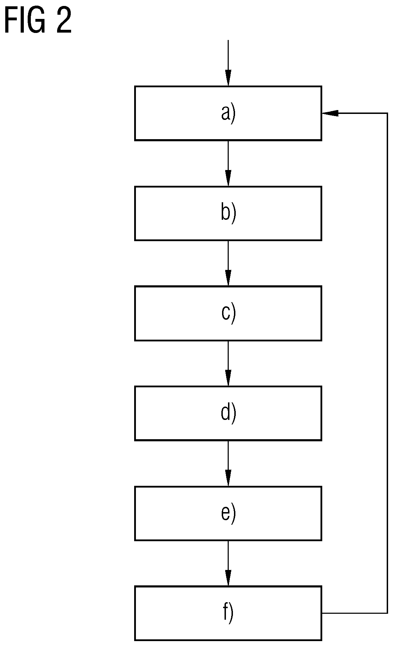

The system can be use technically for different scenarios and perform the following steps, marked with a) to f) in figure 2:
a) Identifying an amount of requirements usually managed in ALM systems, e.g., Github, Gitlab, Polarion (requirement detection from multiple ALM systems). The ALM system's capability is used to detect new and changed requirements that do not yet have adequate acceptance criteria associated with them. Requirement texts of each identified requirement are provided as input, in particular as natural language input.
b) Generating initial Acceptance test: Using the GenAl system, the product owner and/or requirement engineer generates initial acceptance tests for all of the requirement. By prompting a Generative AI system (GenAl system) with the requirement texts the Gen AI system employs artificial intelligence algorithms to formulate acceptance tests in a textual description, whereby the textual description can be formulated in a formal language like the Gherkin language.
c) Judging, whether the generated acceptance test sufficiently address acceptance criteria and cover the respective requirements. So, each acceptance test of the generated output can be rated and expressed in a proportion of requirement coverage. In other words expressed, relation between each requirement and its acceptance criteria is managed. This allows for automated calculation of requirements coverage metrics and enables inspection and validation of the acceptance tests associated with the requirements.
d) Depending on the rating result providing a revised version of the generated textual acceptance test description. That means that acceptance tests are tracked in such which generated acceptance tests could be used without change and which acceptance test have had to be improved.
e) Re-rating each acceptance test of the revised version.
f) Forming samples of the textual acceptance test descriptions classified according to their rating result and storing/using them for training of the same or another Generative AI system. Written or enhanced acceptance tests are (re-)integrated into the GenAl model by using fine-tuning and other techniques e.g. RAG (retrieval augmented generation) see e.g. https://cloud.google.com/use-cases/retrieval-augmented-generation, resulting in a continually self-improving system for generating acceptance tests.
g) (Not shown in figure 2) The Generative AI system can be trained with the samples. Existing acceptance tests are enhanced and new acceptance tests are derived based on the improved GenAl system. This ensures that up-to-date and high-quality acceptance testsare generated.

As shown in figure 2 steps a) to f) can be repeated wherein in the case of that any modification or any new matter in said at least one requirement are identified.

By actively participating in this procedure via user interaction, the product owner and requirement engineer contribute to the overall effectiveness and accuracy of the system in generating and improving acceptance tests for a technical system.

In step b) other formal language as Gherkin can be used. Gherkin is a domain-specific language used to write test scenarios in a human-readable, business-friendly format. It is widely used with Behavior-Driven Development (BDD) tools like Cucumber. Other than test languages, test system and test frameworks can be targeted by our invention. In the description we have focussed on test languages as the most advanced alternative. The respective results can be mapped to the test systems and frameworks by standard technology e.g. compiler. Additionally, the test language Gherkin the following test systems and frameworks can be targeted:
* SpecFlow:
   - It is a Gherkin-based tool tailored for .NET projects.
   - Use Case: Like Gherkin, SpecFlow scenarios are written in natural language, but it provides tight integration with Visual Studio, making it more convenient for .NET developers.
   - Alternative Flavor: While it uses Gherkin syntax, its ecosystem differentiates it from pure Gherkin implementations.
* FitNesse
   - It is a wiki-based testing framework.
   - Use Case: Allows for executable specifications written directly in a wiki, focusing on collaboration between developers and non-technical stakeholders.
   - Key Features: Table-driven test cases and integration with various languages.
* Robot Framework
   - It is a generic test automation framework.
   - Use Case: Uses a keyword-driven approach to write test cases in plain text, HTML, or other formats.
   - Key Features: Highly extensible with libraries and tools, supports writing tests in a human-readable format.
* Concordion
   - It is a BDD framework for Java.
   - Use Case: Allows writing specifications as living documentation using HTML and Java.
   - Key Features: Focuses on documentation and testing simultaneously.
* Behave
   - It is a Python-based BDD framework.
   - Use Case: Uses Gherkin for test definitions but is tailored to Python, similar to how SpecFlow is tailored to .NET.
   - Alternative Flavor: It's a lighter framework than Cucumber for those in the Python ecosystem.
* JBehave
   - It is a Java-based BDD framework.
   - Use Case: An alternative to Cucumber for Java projects, with its own DSL and syntax for behavior-driven tests.
   - Difference: More Java-centric than general-purpose Gherkin.
* TestRail or Zephyr BDD Plugins
   - They are tools that integrate BDD with test management systems.
   - Use Case: Allows writing test cases in a Gherkin-like format directly within a test management tool.
   Key Features: Enhanced traceability and management of BDD tests.
* Lightweight DSLs
   - Custom Options: Teams may design their own Domain-Specific Languages tailored to their project's needs, offering complete customization.
   - Use Case: When you want a simpler or more specific format than Gherkin.
* Cypress Cucumber Preprocessor
   - It is a framework to write behavior-driven tests for web applications using Cypress.
   - Alternative Syntax: While it uses Gherkin, its seamless integration with Cypress testing makes it a competitor.
* Natural (for IntelliJ)
   - It is a plugin for writing BDD tests in IntelliJ IDEA.
   - Use Case: Integrates BDD test writing (including Gherkin-like DSLs) with IntelliJ IDEA for improved developer experience.

The invention has been described in detail with reference to embodiments thereof and examples. Variations and modifications are possible. Instead of the above-described production process one or more processes can analogously be applied to other technical systems.

The multi user system and its parts can be (computer-) implemented for performing the inventive method steps.

Parts of the system can be integrated into a (computer) cloud system. It includes one or more processors and can be coupled with data, where said processor(s) is/are configured to execute the method steps.

The method can be executed by at least one processor such as a microcontroller or a microprocessor, by an Application Specific Integrated Circuit (ASIC), by any kind of computer, including mobile computing devices such as tablet computers, smartphones or laptops, or by one or more servers in a control room or cloud.

For example, a processor, controller, or integrated circuit of the systems and/or computer and/or another processor may be configured to implement the acts described herein.

The above-described method may be implemented via a computer program (product) including one or more computer-readable storage media having stored thereon instructions executable by one or more processors of a computing system and/or computing engine. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. A processor performs or executes the instructions to train and/or apply a trained model for controlling a system. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

In addition, and alternatively, it is possible that a control device receives other computer-readable control signals in order to initiate the mentioned steering/control process by its processor(s).

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

The terminology used herein is for the purpose of describing particular embodiments only and is not intended to be limiting of example embodiments of the invention. As used herein, the singular forms "a", "an", and "the" are intended to include the plural form as well, unless the context clearly indicates otherwise.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims may, alternatively, be made to depend in the alternative from any preceding or following claim, whether independent or dependent, and that such new combinations are to be understood as forming a part of the present specification.

None of the elements recited in the claims are intended to be a means-plus-function element unless an element is expressly recited using the phrase "means for" or, in the case of a method claim, using the phrases "operation for" or "step for".

While the present invention has been described above by reference to various embodiments, it should be understood that many changes and modifications may be made to the described embodiments. It is therefore intended that the foregoing description be regarded as illustrative rather than limiting, and that it be understood that all equivalents and/or combinations of embodiments are intended to be included in this description.

## Claims

1. Computer-implemented method for providing one or more acceptance tests meeting acceptance criteria of an amount of identified requirements for a technical system, comprising the following steps:
g) Identifying an amount of requirements and providing a requirement text of each identified requirement as input;
h) Generating a textual acceptance test description as output by prompting a Generative AI system comprising the input;
i) Rating each acceptance test of the generated output in a proportion of requirements' coverage;
j) Depending on the rating result providing a revised version of the generated textual acceptance test description;
k) Re-rating the revised version of the acceptance test;
l) Forming samples of the textual acceptance test descriptions classified according to their rating result and storing/using them for training of the Generative AI system.

2. Method according to the previous claim, wherein in the case of that any modification or any new matter in said amount of requirements are identified the steps a) to f) are repeated.

3. Method according to any of the preceding claims, wherein the language Gherkin is used for the textual acceptance test description.

4. Method according to any of the preceding claims, wherein the Generative AI system is trained with the samples and after the training the steps a) to f) of claim 1 are applied by using the trained Generative AI system.

5. Method according to any of the preceding claims, wherein the amount of requirements is searched in at least one application lifecycle management systems (ALM1, ALM2, ALM3).

6. Apparatus (CS; SS) for carrying out the computer implemented method according to any of the preceding claims.

7. A computer program product comprising instructions which, when the program is executed by a computer, cause the computer to carry out a method according to any of the preceding method claims.

8. A provisioning device for the computer program product according to the previous claim, wherein the provisioning device stores and/or provides the computer program product.
